# EUROPEAN PATENT SPECIFICATION

(11) **EP 1 580 969 B1**
(45) Date of publication and mention of the grant of the patent: **13.08.2008**
(21) Application number: 04014883.5
(22) Date of filing: 24.06.2004
(51) Int. Cl.: H04M 1/60

(54) **An adjustable bluetooth wireless earphone**
Ein einstellbarer Bluetooth Radioapparatkopfhörer
Un écouteur radio bluetooth réglable

(30) Priority: 23.03.2004 CN 04273714 U
(43) Date of publication of application: 28.09.2005
(73) Proprietor: Global Target Enterprise INC., Taipei, Taiwan (TW)
(72) Inventor: Tsai, Liang-Tan, Hsin tien, Taipei, Taiwan (TW); Liao, Chung-Cheng, Hsin tien, Taipei, Taiwan (TW); Lu, Pei-Yu, Hsin tien, Taipei, Taiwan (TW)
(74) Representative: Viering, Jentschura & Partner

(56) References cited:
- EP-A- 1 278 394
- US-A1- 2003 003 969
- US-A1- 2003 114 201
- US-B1- 6 373 942

## Description

### BACKGROUND OF THE INVENTION

### 1. Field of the invention

The present invention relates to an adjustable wireless earphone, and particularly to an adjustable wireless earphone which the earphone body thereof can be rotated in all direction so that the plug-set thereof may tightly plug the ear of the user and not easily drop out from the ear.

### 2. Description of the prior art

In EP-A-1 278 394 is disclosed a wireless earphone, which can be worn as an earphone or as a headphone, comprising a main part having two different mounting portions, for an ear-hanger on the one side and a head-ring on the other side, and a sunken part for selectively mounting an upper cover on the main part. The upper cover comprises different colors and is a rubber cushion, which can easily assembled and disassembled to the upper cover. The mounting portion for the ear-hanger comprises a base formed on the main part, in which base a rotating part with a channel is mounted. For use as an earphone an ear-hanger can be inserted in the channel, such that the ear-hanger can be adjusted properly to the thickness of the user's ear style. For use as an headphone the rubber cushion has to be replaced by a so called position set for mounting an head-ring to that position set, which head-ring is to be worn on the head of the user.

In US 2003/003969 is disclosed a headset to be wire-line connected to a mobile phone. The headset essentially comprises an ear-plug shaped to fit into the ear of a user, an arm extending from the ear-plug to an pivot end of the same, a telescoping arm pivotally connected to the pivot end, which telescoping arm carries a microphone, a support protrusion, extending from the pivot end to provide additional support and stabilization to the headset against the head of the user, and communication leads located at the pivot end through which leads communication wires run to be connected to a mobile phone. To additional secure the headset to a users head an ear hook or an eyeglass attachment is provided, which may be attached to the headset.

In order to reduce the rising incidence of traffic accidents due to handholding a mobile phone while driving, many countries has established relevant regulations to strictly forbid any driver communicating by a handheld mobile phone with others during driving to reduce the traffic incidence effectively. Therefore, currently, among many products emerging to match up such government regulations, the most common product is a hand-free kit for mobile phone with a function which the driver places the mobile phone in the seat of the hand-free kit before driving, so the speaker of the kit or the speaker system in the car will broadcast the communication message once a call inbounds. This practice can enable the driver to communicate with others without handholding a mobile phone. Since the hand-free kit is associated with the build-in speaker in the car, this may generate too much noise or echo when the driver communicating with others, such that the inbound message can not be received clearly and there is no privacy if any other passenger present. Therefore, such a hand-free kit is not designed properly.

For solving the disadvantage derived from the hand-free kit, now there are over-ear and headset wireless earphones available in the market, it may put on the ear or the head of the user, without the fault of generating too much echoes and exposing the content of the communication while the driver communicating with others. But, the commercial available over-ear or headset wireless earphone usually is die-cast with the wireless principal body, thus there is no way to adjust the angle of the earphone appropriately according to the shape of the ear or the head of the user, this makes the wearing user feeling uncomfortable.

Thus, it can be seen that the above-described conventional articles still have many drawbacks. They are not designed properly, and need to be improved urgently.

In view of the disadvantages derived from the above-described conventional earphone, the inventor had devoted to improve and innovate, and after studying intensively for many years, successfully developed this adjustable wireless earphone according to the present invention finally.

### SUMMARY OF THE INVENTION

The object of the present invention is to provide an adjustable wireless earphone wherein the angle thereof can be adjusted in all direction.

The another object of the present invention is to provide an adjustable wireless earphone wherein the plug-set thereof can tightly plug the ear of the user and not easily drop out from the ear.

The further object of the present invention is to provide an adjustable wireless earphone that has many advantages including: simple structure, easy assembling, convenient operation, etc.

To achieve the above-mentioned objections a wireless earphone is provided having the features of claim 1. Advantageous further embodiments are described in the respective dependent claims.

The adjustable wireless earphone is an adjustable Bluetooth wireless earphone comprising an earphone body, a link-part, and a plug-set, wherein the front upper portion of the earphone body has a extended flange which makes the corresponding back thereof forms a concave portion, the rim of the concave portion is rounded with a guide-piece and a hole in the flange; the rear end of the link-part has a pin-connecting portion and the front end thereof extends horizontally a position-piece, the position-piece at the front end of the link-part passes through the hole of the body such that the pin-connecting portion at the rear end pin-connects with the concave portion and contacts with the guide-piece of the concave portion so the link-part can be positioned, thus the angle of the earphone body can be adjusted in all direction using the link-part as an axis; the bottom of the plug-set has a concave hole, a guide-trough in the concave hole matches the shape of the front end of the link-part; the guide-trough at the bottom of the plug-set fits with the front portion of the link-part, so the position-piece at the front end of the link-part enters the plug-set and after the plug-set is rotated with a certain angle so as to enable the position-piece combining with the inner wall surface of the concave hole of the plug-set tightly such that the plug-set and the link-part can co-move and the concave hole can entirely cover the flange at the top surface of the body to unite the plug-set and the body as a whole; when the plug-set plugs the ear of the user, since the earphone body has a feature that can be rotated in all direction, the earphone body can be pressed close to the cheek portion of the user to form an angle between the earphone body and the plug-set such that the plug-set can stay on the ear of the user more tightly and not drop out easily, and the user can listen in the voice smoothly.

These features and advantages of the present invention will be fully understood and appreciated from the following detailed description of the accompanying Drawings.

### BRIEF DESCRIPTION OF THE DRAWINGS

Fig. 1 shows the break-down schematic diagram of an adjustable Bluetooth wireless earphone according to the present invention;
Fig. 2 shows the pictorial schematic diagram of an adjustable Bluetooth wireless earphone according to the present invention;
Fig. 3 is a schematic diagram shows the combination of the link-part and the plug-set of an adjustable Bluetooth wireless earphone according to the present invention;
Fig. 4A and 4B are the action schematic diagram of an adjustable Bluetooth wireless earphone according to the present invention; and

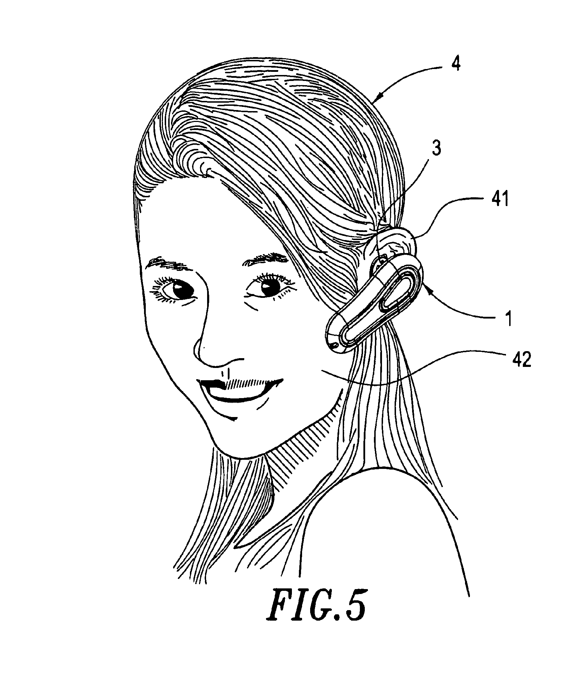

Fig. 5 shows the implementation schematic diagram of an adjustable Bluetooth wireless earphone according to the present invention.

### DETAILED DESCRIPTION OF THE PREFERRED EMBODIMENT

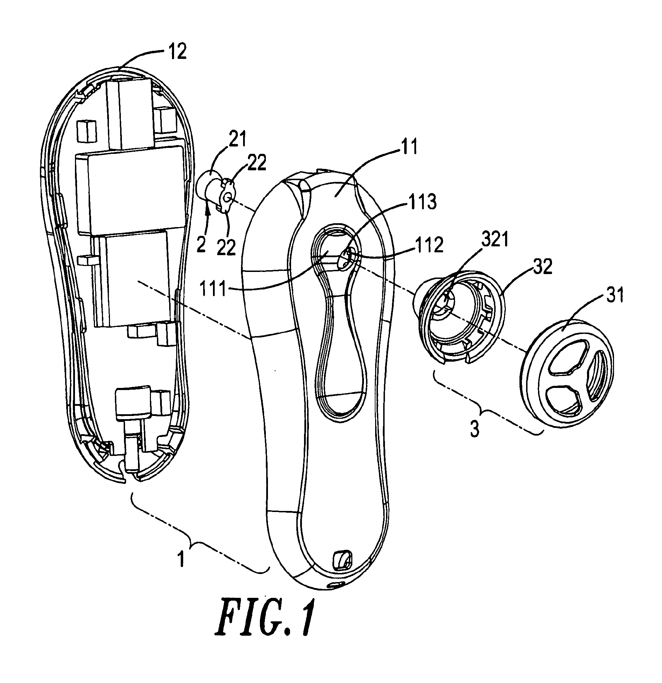

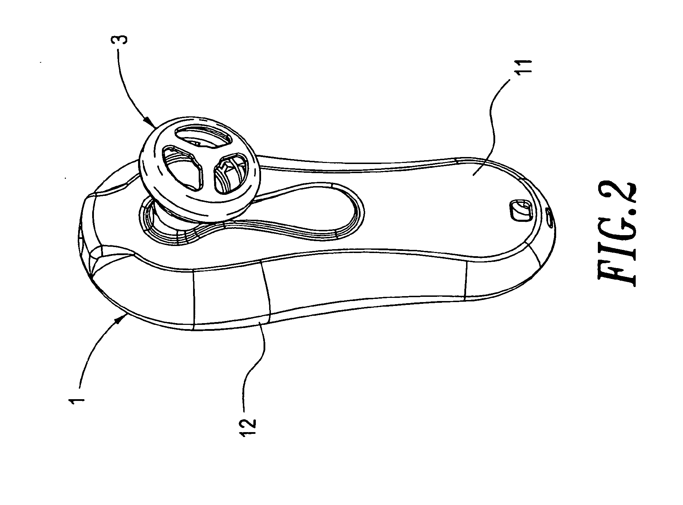

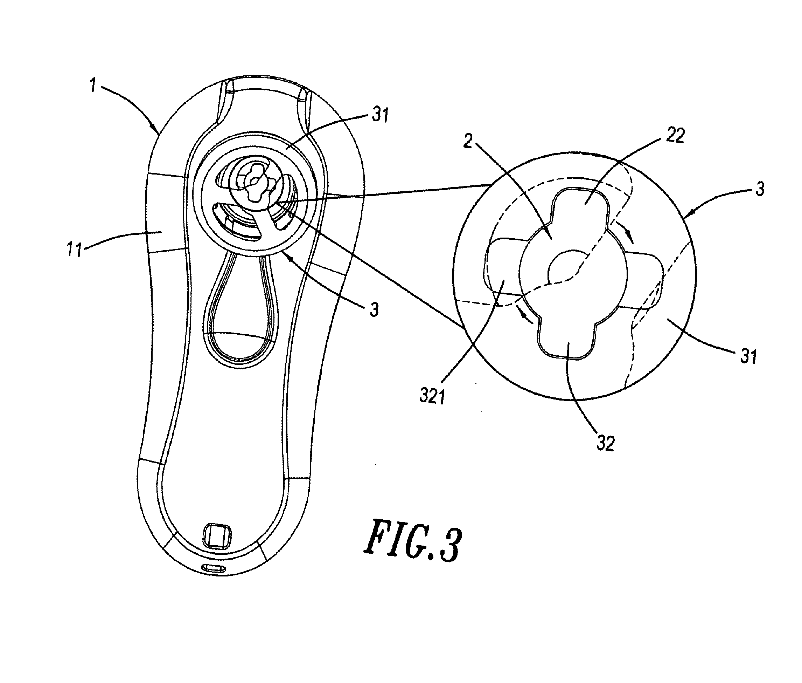

Please refer to Fig.1 - 3, an adjustable Bluetooth wireless earphone provided by the present invention mainly comprising:

An earphone body 1, the earphone body 1 is assembled by a front and a rear housing body 11, 12, a flange 111 extruded from the front upper portion of the front housing body 11 forms a corresponding concave portion in the back thereof (not shown), the rim of the concave portion is rounded with a guide-piece 112, and a hole 113 is punched on the flange 111;

A link-part 2, having a pin-connecting portion 21 at the rear end of the link-part 2, the surface of the pin-connecting portion 21 can be spherical, and having a position-piece 22 extending horizontally from each side of the front end of the link-part 2; the position-piece 22 at the front end of the link-part 2 passing from the back of the front housing body 11 of the earphone body 1 through the hole 113 such that the position-piece 22 of the link-part2 extrudes from the hole 113 of the flange of the front housing body 11, and the pin-connecting portion 21 at the rear of the link-part 2 pin-connects with the concave portion in the back of the front housing body 11, and the spherical surface of the link-part 2 contacts with the guide-piece 112 of the concave portion, so that the link-part2 can be positioned, and the earphone body 1 using the pin-connecting portion 21 of the link-part 2 as an axis and assisted by the guide-piece 112, thus the angle thereof can be adjusted in all direction including: rotated in 360 degree and turned upward, downward, leftward, and rightward;

A plug-set 3, the plug-set 3 comprising a base 32 and a cover 31, and the cover 31 lays over the top surface of the base 32 to cover the base 32, the bottom of the base 32 has a concave hole(not shown), the concave hole has a guide-trough 321 matching the shape of the front end of the link-part 2; the guide-trough 321 at the bottom of the base 32 of the plug-set 3 fits with the front portion of the link-part 2 so that the position-piece 22 at the front of the link-part 2 can enter the base 32 via the guiding of the guide-trough321 and then the base 32 is rotated with a degree so that the position-piece 22 tightly fits with the inner surface of concave hole of the base 32, and the concave hole can fully cover the flange 111 on the top surface of the body 1, thus the plug-set 3 can co-move with the link-part 2 and unite with the body1 as a whole.

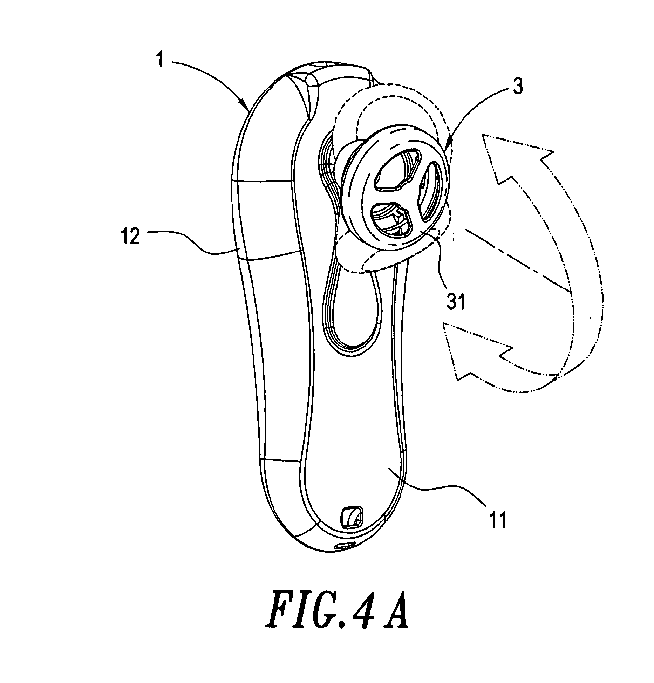

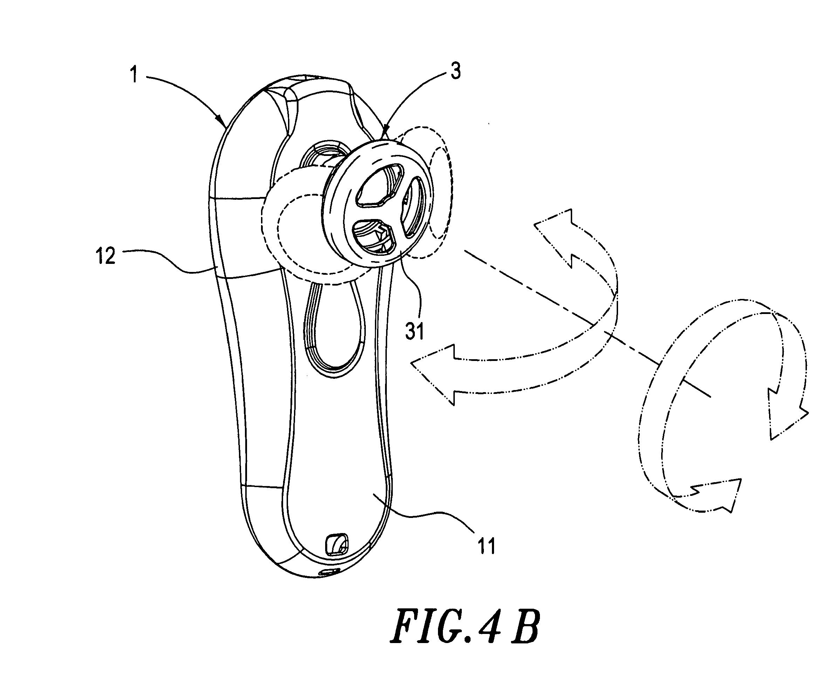

Fig. 4A and 4B are an action and an implementation schematic diagrams according to the present invention respectively. While the user 4 wants to use the earphone body 1, the plug-set 3 plugs the ear 41 of the user 4 to position the plug-set 3 and the link-part 2. Now, using the feature that the angle of the earphone body 1 can be rotated in 360° and adjusted upward, downward, leftward, rightward, so the earphone body 1 can be pressed according to the shape of the cheek 42 of the user 4 close to the cheek 42 portion of the user 4 to form an angle between the earphone body 1 and the plug-set 3. As the angle formed, the plug-set 3 may stay more tightly on the ear 41 of the user 4 and not easily drop out, thus achieving the object that the user can listen in the voice smoothly.

As compared with other conventional techniques, the adjustable Bluetooth wireless earphone provided by the present invention has more following advantages including:
1. The present invention which the earphone body thereof is united with the plug-set thereof as a whole via a link-part, and the link-part is pin-connected with the earphone body, so that the earphone body can be adjusted in all direction using the link-part as an axis, thus the plug-set can plug the ear of the user tightly and not drop out easily.
2. The present invention has many advantages including: simple structure, easy operation, convenient assembly, etc.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An adjustable Bluetooth wireless earphone, comprising an earphone body (1), a link-part (2), and a plug set (3) which can tightly be lugged in the ear of a user, wherein the link-part (2) is adapted to hingedly connect the earphone body (1) with the plug set (2) such that the earphone body (1) and the plug-set (3) can be rotatably adjusted in all directions,
**Characterized in, that**:
the earphone body (1) comprises a front housing body (11) and a back housing body (12) assembled together, the front housing body comprising a flange (111) extruding from an upper portion of the front housing body (11) and correspondingly forming a concave portion in the back of the front housing body (11), the flange including a hole (113) punched into the flange (111),
the link-part is adapted to (2) penetrate the hole (113) of the flange of the front housing body (11) and comprises a rear end and a front end, wherein the rear end of the link-part (2) comprises a spherical portion (21) and the front end of the link-part (2) comprises a position-piece (22) extending form the front end of the link-part (2), the spherical portion (21) of the link-part being (2) hingedly connected with the concave portion in the back of the front housing body (11) by contacting the concave portion,
the plug set (3) comprises a base (32) and a cover (31) covering the base (32), a bottom of the base (32) comprising a concave hole with a guide-trough (321) matching the shape of the front end of the link-part (22), wherein the front end and the position-piece (22) thereof are adapted to be entered via the guiding of the guide-trough (321) into the base (32) and to be rotated thereby tightly combining the position-piece (22) with the inner surface of the concave hole of the base (32).

2. The adjustable Bluetooth wireless earphone of claim 1, wherein a rim of concave portion of the front housing body (11) is rounded with a guide piece (112) for contacting with the spherical portion (21) of the link-part (2).

## Patentansprüche

1. Einstellbare Bluetooth-Drahtlos-Hör- und Sprechgarnitur, aufweisend einen Hör- und Sprechgarniturkörper (1), ein Verbindungsteil (2) und eine Steckvorrichtung (3), die in das Ohr des Nutzers fest einsteckbar ist, wobei das Verbindungsteil (2) den Sprechgarniturkörper (1) mit der Steckvorrichtung (2) gelenkig verbindet, so dass der Sprechgarniturkörper (1) an die Steckvorrichtung (3) in allen Richtungen drehbar einstellbar ist,
**dadurch gekennzeichnet, dass**:
der Hör- und Sprechgarniturkörper (1) eine vordere Gehäusehälfte (11) und eine hintere Gehäusehälfte (12) aufweist, die aneinander montiert sind, wobei die vordere Gehäusehälfte einen Flansch (111), der sich aus dem oberen Abschnitt der vorderen Gehäusehälfte (11) hervor erstreckt und einen korrespondierend geformten konkaven Abschnitt auf der hinteren Seite der vorderen Gehäusehälfte (11) aufweist, wobei der Flansch ein Loch (113) aufweist, das in den Flansch (111) eingebracht ist,
das Verbindungsteil (2) zum Durchdringen des Loches (113) des Flansches der vorderen Gehäusehälfte (11) ausgebildet ist und ein hinteres Ende und ein vorderes Ende aufweist, wobei das hintere Ende des Verbindungsteils (2) einen kugelförmigen Abschnitt (21) aufweist und das vordere Ende des Verbindungsteils (2) einen Positionierteil (22) aufweist, der sich von dem vorderen Ende des Verbindungsteils (2) erstreckt, wobei der kugelförmige Abschnitt (21) des Verbindungsteils (2 mit dem konkaven Abschnitt in der hinteren Seite der vorderen Gehäusehälfte (11) durch In-Kontakt-Stehen mit dem konkaven Abschnitt gelenkig verbunden ist, und
die Steckvorrichtung (3) eine Basis (32) und eine die Basis (32) bedeckende Abdeckung (31) aufweist, wobei ein Boden der Basis (32) ein konkaves Loch mit einer Führungsrinne (321) aufweist, die an die Gestalt des vorderen Endes des Verbindungsteils (22) angepasst sind, wobei das vordere Ende und dessen Positionierteil (22) derart ausgebildet sind, dass sie über die Führungsrinne (321) in die Basis (32) einsetzbar und dabei drehbar sind, so dass der Positionierteil (22) mit der Innenfläche des konkaven Loches der Basis (32) kombinierbar ist.

2. Einstellbare Bluetooth-Drahtlos-Hör- und Sprechgarnitur gemäß Anspruch 1, wobei ein Rand des konkaven Abschnittes der vorderen Gehäusehälfte (11) von einem Führungsteil (112) zum In-Kontakt-Stehen mit dem kugelförmigen Abschnitt (21) des Verbindungsteils umrundet ist.

## Revendications

1. Ecouteur sans fil Bluetooth réglable, comprenant un corps d'écouteur (1), une partie de liaison (2) et un ensemble de fiche (3) qui peut être placé dans l'oreille d'un utilisateur, dans lequel la partie de liaison (2) est adaptée afin de relier par basculement le corps d'écouteur (1) à l'ensemble de fiche (2) afin de que le corps d'écouteur (1) et l'ensemble de fiche (3) puissent être ajustés par rotation dans toutes les directions,
**caractérisé en ce que** :
le corps d'écouteur (1) comprend un corps de logement avant (11) et un corps de logement arrière (12) assemblés ensemble, le corps de logement avant comprenant un rebord (111) sortant d'une partie supérieure du corps de logement avant (11) et formant en correspondance une partie concave dans l'arrière du corps de logement avant (11), le rebord comprenant un trou (113) percé dans le rebord (111),
la partie de liaison (2) est adaptée afin de pénétrer dans le trou (113) du rebord du corps de logement avant (11) et comprend une extrémité arrière et une extrémité avant, où l'extrémité arrière de la partie de liaison (2) comprend une partie sphérique (21) et l'extrémité avant de la partie de liaison (2) comprend un élément de positionnement (22) s'étendant depuis l'extrémité avant de la partie de liaison (2), la partie sphérique (21) de la partie de liaison (2) étant reliée par basculement à la partie concave dans l'arrière du corps de logement avant (11) en touchant la partie concave,
l'ensemble de fiche (3) comprend une base (32) et un capot (31) recouvrant la base (32), un bas de la base (32) comprenant un trou concave ayant un creux de guidage (321) correspondant à la forme de l'extrémité avant de la partie de liaison (22), où l'extrémité avant et l'élément de positionnement (22) de celle-ci sont adaptés afin de pénétrer, via le guidage du creux de guidage (321), dans la base (32), et afin d'être tournés, combinant ainsi l'élément de positionnement (22) avec la surface interne du trou concave de la base (32).

2. Ecouteur sans fil Bluetooth réglable selon la revendication 1, dans lequel un bord de la partie concave du corps de logement avant (11) est arrondi avec un élément de guidage (112) destiné à toucher la partie sphérique (21) de la partie de liaison (2).
